(19) Europäisches Patentamt
European Patent Office
Office européen des brevets

(11) **EP 4 436 115 A1**

(12) **EUROPEAN PATENT APPLICATION**

(43) Date of publication:
**25.09.2024 Bulletin 2024/39**

(21) Application number: **23305402.2**

(22) Date of filing: **23.03.2023**

(51) International Patent Classification (IPC):
***H04L 25/02*** *(2006.01)*

(52) Cooperative Patent Classification (CPC):
**H04L 25/0224; H04L 25/0252**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventor: **CORLAY, Vincent
35708 RENNES CEDEX 7 (FR)**

(74) Representative: **Plasseraud IP
104 Rue de Richelieu
CS92104
75080 Paris Cedex 02 (FR)**

(54) **AN IMPROVED METHOD FOR THE IDENTIFICATION OF A WIENER-HAMMERSTEIN MODEL**

(57) The invention relates to a method to parameter a model of a telecommunication channel, said communication channel comprising an emitter, a receiver, and at least one amplifier amplifying a signal sent by the emitter to the receiver; said model comprising a series of at least one linear filter, and a non-linear function; said method comprising: sending to the receiver, by the emitter, a first pilot sequence $x_1$ , said first pilot sequence being a wideband sequence; sending to the receiver, by the emitter, a second pilot sequence $x_2$, said second pilot sequence being a band-limited sequence in a band of said at least one linear filter, parameters of said band being determined from a first received sequence $w_1$, corresponding to the first pilot sequence $x_1$, sent by the emitter, and said second pilot sequence having an amplitude higher than an amplitude of the first pilot sequence.

```
S41 ──── │     Send x₁     │
                  │
S42 ──── │      Det r      │
                  │
S43 ──── │     Send x₂     │
                  │
S44 ──── │      Det c      │
                  │
S45 ──── │     Send x₃     │
                  │
S46 ──── │     Det h,g     │

P4 ╱
                  FIG. 4
```

EP 4 436 115 A1

**Description**

**Technical Field**

This disclosure pertains to the field of telecommunications. More specifically, it relates to the parameters of models of telecommunications channels.

**Background Art**

Many communications systems are equipped with amplifiers working near saturation to optimize their efficiency. Moreover these amplifiers may also exhibit a memory effect. In such cases, the channel encountered is non-linear with memory, which means that the signal received is affected by non-linear distortion compared to the signal which is emitted. Examples of such systems includes systems with very powerful amplifiers which are used near their maximum power, such as for example systems that comprise a satellite transmission, and conversely systems that comprise very simple amplifiers, such as for example IoT systems.

In order to mitigate this non-linear channel, predistortion techniques at the transmitter are often used. These techniques consist in pre-distortion the signal before transmission so that the receiver receives a signal which is as similar as possible to the signal that is intended to be transmitted. Such techniques are for example described by R. Piazza, B. Shankar, and B. Ottersten, Generalized direct predistortion with adaptive crest factor reduction control, 2015 IEEE International Conference on Acoustics, Speech and Signal Processing (ICASSP), Apr 2015, B. Widrow and S. D. Stearns, Adaptive signal processing. 1985, vol. 1., D. Zhou and V. E. DeBrunner, "Novel adaptive nonlinear predistorters based on the direct learning algorithm", IEEE Trans. Signal Process., vol. 55, no. 1, pp. 120-133, 2007, N. Alibert, Iterative predistortion algorithms adapted to the increasing throughput of satellite communications, 2018.

These techniques imply that the transmitter is able to identify and accurately model the channel. Another option consists in correcting the distortion at the receiver side, but this solution requires that the receiver is able to identify and accurately model the channel. At some point, the channel needs to be modeled in order to perform an accurate correction of distortion implied by the channel.

An example of model allowing to perform such correction of the distortion is the Wiener-Hammerstein model described by . R. Morgan, Z. Ma, J. Kim, M. G. Zierdt, and J. Pastalan "A Generalized Memory Polynomial Model for Digital Predistortion of RF Power Amplifiers", vol. 54, no. 10, 2006. The name "Wiener-Hammerstein" comes from the fact that a linear filter followed by a non-linearity is called a Wiener model and a non-linearity followed by a linear filter a Hammerstein model.

The identification of models such as the Wiener-Hammerstein model may be performed by sending, by the emitter of the channel predefined sequences called "pilot sequences", and comparing the received sequence with the pilot sequence to infer the parameters of the model. An example of technique allowing to identify parameters of such model from received sequence is called "Volterra series", and is introduced by S. Benedetto, E. Biglieri, and R.Daffara, "Modeling and Performance Evaluation of Nonlinear Satellite Links-A Volterra Series Approach," IEEE Trans. Aerospace and electronic systems, vol. 15, no. 4, Jul. 1979. Volterras series provides some advantages, listed below:

- it enables to analyze of the performance of the system and assess analytically the error probability, as shown by S. Benedetto, E. Biglieri, and R.Daffara, "Modeling and Performance Evaluation of Nonlinear Satellite Links-A Volterra Series Approach," IEEE Trans. Aerospace and electronic systems, vol. 15, no. 4, Jul. 1979 ;

- it enables to identify the channel with the least square algorithm, as shown by the section IV of D. R. Morgan, Z. Ma, J. Kim, M. G. Zierdt, and J. Pastalan "A Generalized Memory Polynomial Model for Digital Predistortion of RF Power Amplifiers", vol. 54, no. 10, 2006 ;

- it enables to use some specific pre-distortion techniques, such as the p-th order inverse, as shown by A. Sarti and S. Pupolin, "Recursive techniques for the synthesis of a pthorder inverse of a Volterra system", Eur. Trans. Telecommun., vol. 3, no. 4, pp. 315-322, 1992.

The Volterra model however has drawbacks, which notably come from the fact that many coefficients are needed to accurately model the channel. This implies that:

- a large pilot sequence is required to identify the channel with a high-enough accuracy ;

- the inference stage, when the transmitter uses this channel model for the predistortion step, has a high computational complexity ;

- the identification step has a high memory and computational complexity: It involves inverting a matrix whose size depends on the size of the pilot sequence. Hence, a large pilot sequence implies a high complexity.

There is therefore the need of a method to accurately model a telecommunication channel without relying on large approximations of the model.

**Summary**

This disclosure improves the situation.

It is proposed a method to parameter a model of a telecommunication channel, said communication channel comprising an emitter, a receiver, and at least one amplifier amplifying a signal sent by the emitter to the receiver; said model comprising a series of at least one linear filter, and a non-linear function ; said method comprising: a) sending to the receiver, by the emitter, a first pilot sequence $x_1$ , said first pilot sequence being a wideband sequence; b) sending to the receiver, by the emitter, a second pilot sequence $x_2$, said second pilot sequence being a band-limited sequence in a band of said at least one linear filter, parameters of said band being determined from a first received sequence $w_1$ corresponding to the first pilot sequence $x_1$ sent by the emitter, and said second pilot sequence having an amplitude higher than an amplitude of the first pilot sequence.

By "pilot sequence" we designate a signal sent by the emitter to the receiver in order to obtain a received signal, and analyze the characteristics of the received signal to determine characteristics of the telecommunication system. The pilot sequences may be either predefined, or defined in real time during the execution of the method.

By "wideband sequence", we designate a pilot sequence whose energy is spread over the whole, or at least a large part of frequency spectrum that may be used by the telecommunication system.

By "band-limited sequence in the band of said at least one filter", we designate a signal whose energy is fully or essentially comprised in the band of the at least one filter. The band sequence may be a signal having frequencies substantially in the band of the at least one filter.

By "a band of said at least one linear filter", we designate a frequency interval in which the at least one linear filter transmit information. The transmission of information may be defined in different ways. For example, the transmission of information may be defined by an energy attenuation above a threshold, for example above -3dB, -6dB, etc. The band of the at least one linear filter may define different bands. For example, it may define a high-pass, low-pass or band-pass filter.

By "an amplitude", we designate a value relative to the magnitude of a signal or pilot sequence. According to various embodiments of the invention, an amplitude may for example be one or more of:

- a maximum amplitude ;

- a peak amplitude ;

- an average amplitude ;

- a value threshold such that $p(X > \text{threshold}) = \tau$, where $X$ denotes a random variable representing the amplitude of the signal and $\tau$ is a percentage value, e.g. $\tau$ =5%, and $p(X > \text{threshold})$ the probability that $X$ is greater than the threshold.

- etc.

The first pilot sequence allows determining a band of the at least one linear filter on the whole spectrum that can be used by the telecommunication channel.

Meanwhile, the second pilot sequence has a higher amplitude than the first pilot sequence, so that the second received sequence is affected by the non-linearity of the non-linear function, while the first received sequence is not affected by the non-linearity of the non-linear function.

As the second pilot sequence comprises frequencies only in the band of at least one linear filter, this sequence not affected by the linear filters before the non-linear function.

This therefore allows determining the parameters of the model and notably the non-linear function.

The method therefore allows determining the parameters of a model of telecommunication channels defined as a series of at least one linear function, and a non-linear function, such as for example a Wiener-Hammerstein model.

The values of the parameters of the model can be identified accurately, because the model does not need to be approximated.

The estimation of the model of the telecommunication channel allows improving the communication, for example reduce the distortion of the signals when using the telecommunication channel.

This for example allows using an amplifier at its maximum power, while avoiding non-linear distortion of the received signal. The avoidance of distortion of the received signal allows for example avoiding interferences with other frequency carriers.

Advantageously, the second pilot sequence $x_2$ is determined by the emitter using data received from the receiver, said data comprising at least one of: the second pilot sequence ; an index of the second pilot sequence in a codebook ; the first received sequence $w_1$ ; parameters of the first received sequence $w_1$ ; parameters of the band of the at least one linear filter.

This provides practical options for the emitter to receive information that allow obtaining the second sequence, depending upon the first received sequence received by the receiver.

Advantageously, the method further comprises d) determining (S44), from a second received sequence $w_2$ corresponding to the second pilot sequence $x_2$ sent by the emitter, parameters of the non-linear function, or parameters of a cascade of the non-linear function and at least one linear filter after the non-linear function in the model.

This allows determining, at the emitter or receiver side, parameters of the non-linear function, or a cascade of the non-linear function and the linear filters after the non-linear function in the model.

Advantageously, said model comprises a first linear filter before said non-linear function, and a second linear filter after the non-linear function.

This allows using Wiener-Hammerstein models to represent a telecommunication channel.

Advantageously, the non-linear function is defined as a polynomial having only odd order terms ; the second pilot sequence raised to the power of each of the odd order terms of the polynomial is concatenated in a single sequence; said parameters of the first linear filter and parameters of the second linear filter are determined based at least on the following steps: modeling said cascade of the non-linear function and the second linear filter as a single filter ; estimating the parameters of said single filter that minimize a difference between said second received sequence and an estimate of said second received sequence by filtering the second pilot sequence by said single sequence.

Modeling the non-linear function as a polynomial having only odd order terms produces a good approximation of amplifiers in a telecommunication channel. Indeed, even order polynomial terms produce out-of-band signals, and amplifiers produce a linear output at low amplitudes.

Therefore, this allows an efficient determination of the parameters of the Hammerstein model formed by the non-linear function and the second linear filter.

Advantageously, said polynomial comprises a first order term and a third order term ; said parameters of the cascade of the non-linear function and the second linear filter are further determined from the second received sequence $w_2$ by: filtering said second received sequence by a band-pass filter obtained as a convolution of said first linear filter and said second linear filter to obtain a band-filtered second received sequence ; filtering the second pilot sequence by an estimation of the third-order coefficient of said single filter and said band-pass filter to estimate a contribution of the first order term to the band-filtered second received sequence ; filtering a cubic power of the second pilot sequence the second pilot sequence by the estimation of the third-order coefficient of said single filter and said band-pass filter to estimate a contribution of the third order term to the band-filtered second received sequence ; estimating a ratio between a first order coefficient of the non-linear function and a third order coefficient of the first order function based on band-filtered second received sequence, said contribution of the first order term to the band-filtered second received sequence and said contribution of the third order term to the band-filtered second received sequence ; replacing an estimation of the first-order coefficient of said single filter by the estimation of the first-order coefficient of said single filter multiplied by said ratio.

This replaces the estimation of the parameters of the single filter relative to the first-order term of the non-linear function by an estimation based on the parameters of the single filter relative to the third-order terms.

This estimation may be more accurate because in the parameters of the single filter relative to the third-order terms generate signals having energy outside of the band of the band-pass filter, and therefore more sensitive to the high-pass filter defined by the second linear filter.

Performing this on signals in the band of the band pass filter allows performing the operations where most of the energy of the signal is concentrated.

Advantageously, the method comprises: repeating the determination of the cascade of the non-linear function and the second linear filter for a plurality of candidate non-linear functions corresponding respectively to a plurality of polynomials having different numbers of odd order terms; selecting, , among said plurality of non-linear function, a non-linear function that minimize an error function.

This allows selecting the optimal polynomial order. Indeed, the results of the different polynomial orders may be different depending in each case. For example, a 5th-order polynomial is generally considered as more accurate than 3rd order polynomial but requires significantly more data to be properly trained. Therefore, in many cases, a 3rd order polynomial provides better results than 5th-order polynomials. This observation can be generalized to higher-level polynomials. Therefore, this allows to select the optimal polynomial degree without any a priori assumption.

Advantageously, the maximum amplitude of the second pilot sequence is equal to an expected maximum amplitude of the signals to be transmitted by the transmitter.

This allows to optimize the fitting of the polynomial of the non-linear function in an amplitude range that comprises the maximum intensities of all the foreseeable signals to be transmitted by the transmitter.

Advantageously, the method further comprises: e) sending to the receiver, by the emitter, a third pilot sequence $x_3$, said third pilot sequence being a band-limited sequence in the band of said at least one linear filter and having an average amplitude lower than the average amplitude of the second pilot sequence.

The energy of the third pilot sequence is concentrated in the band of at least one linear filter, and its amplitude is low enough to avoid being affected by the non-linear function during the transmission. This therefore allows obtaining the values of the parameters of the linear filters from the already known parameters.

Advantageously, parameters of a cascade of the non-linear function and the second linear filter are determined from the second received sequence $w_2$; parameters of the first linear filter and parameters of the second linear filter are determined from a third received sequence $w_3$ corresponding to the third pilot sequence $x_3$ sent by the emitter, and from parameters of the band of said at least one linear filter.

Thus, all the parameters of a model comprising two linear filters and a non-linear function such as a Wiener-Hammerstein model can be determined.

Advantageously, said parameters of the first linear filter and parameters of the second linear filter are determined based at least on the following steps: determining a scaling factor $\alpha$, equal to the inverse of the coefficient corresponding to the first order term of the non-linear function; determining, from said scaling factor $\alpha$, and said parameters of the cascade of the non-linear function and the second linear filter, parameters of the second linear filter; determining, from said parameters of the band of the at least one linear filter, and said parameters of the second linear filter, parameters of the first linear filter.

This provides a step-by-step method for determining the values of the parameters of all the filters and functions.

Advantageously, said parameters of said band are determined under the assumption that the first received sequence is equal to the application of said band to the first pilot sequence.

In such case, the parameters of the band filter can be estimated because the model can be approximated as the at least one linear filter, modeled as a single filter, so the parameters of the band filter can be calculated from the first pilot sequence, and the first received sequence.

Advantageously, at least one of the first pilot sequence and the third pilot sequence is a sum of sinusoids of equal power whose phases minimize a amplitude of the signal, or predicted signal at the output of the at least one linear filter.

Using a sum of sinusoids allows in the same time to control the frequency spectrum, and the amplitude, of the first or second pilot sequence, in order to obtain a signal in a desired frequency band whose amplitude is sufficiently low to avoid non-linear effects from the non-linear function.

Advantageously, the method comprises: verifying if the first received sequence is affected by the non-linear function; if the first received sequence is affected by the non-linear function: modifying the first pilot sequence so as to reduce its amplitude ; going back to step a); if the first received sequence is not affected by the non-linear function, going to step b).

This ensures that the first processing sequence has an amplitude low enough to avoid the non-linearity of the non-linear function, and thus that the band-pass filter accurately represents the convolution of the low-pass filter and the high-pass filter.

Advantageously, said step of verifying if the first received sequence is affected by the non-linear function comprises: calculating a norm of a difference between the first received sequence, and an application of an estimate of the at least one filter to the first pilot sequence; if the norm is higher than an expected noise of the channel, outputting that the first received sequence is affected by the non-linear function.

This provides an effective method for verifying if the first received sequence is affected by noise.

Advantageously, at least one of an estimation of at least one of said parameters of said band, of the non-linear function, or a cascade of the non-linear function and at least one linear filter after the non-linear function in the model, is performed using a least-square algorithm to minimize a Normalized Mean Square Error.

This allows an effective determination of the parameters of the model to reduce the NMSE when using the telecommunication channel, and therefore improve the accuracy of the communications.

Advantageously, at least one of an estimation of at least one of said parameters of said band, of the non-linear function, or a cascade of the non-linear function and at least one linear filter after the non-linear function in the model, is performed by the receiver, and the receiver is configured to transmit to the emitter at least one data relative to at least one of the band and the second pilot sequence.

By "at least one data relative to at least one of the band-pass filter and the second pilot sequence", we designate at least one data that either defines, or allows to retrieve the parameters of the band-pass filter, and/or the second pilot sequence.

Such at least one data may comprise at least one of:

- the parameters of the band-pass filter;

- the band frequency of the band-pass filter;

- the second pilot sequence ;

- an identifier of the pilot sequence in a codebook;

- etc.

This allows the receiver to determine the parameters of the model directly based upon the received sequences, while letting the transmitter have the relevant data to transmit the relevant second pilot sequence.

Advantageously, at least one of an estimation of at least one of said parameters of said band, of the non-linear function, or a cascade of the non-linear function and at least one linear filter after the non-linear function in the model is performed by the transmitter, and the receiver is configured to transmit at least one of the first received sequence and the second received sequence to the transmitter.

This allows the transmitter to have the knowledge of both the pilot sequences and the received sequences in order to determine the parameters of the model.

Advantageously, the method further comprises: adapting a predistortion function based on said model; applying, by the emitter, said predistortion function to a signal to obtain a predistorted signal; transmitting said predistorted signal.

This allows the emitter to emit, instead of a signal to transmit, a predistorted signal such that the message which is received by the receiver is as similar as possible to the message to transmit.

In another aspect, it is proposed a method comprising: adapting a predistorsion function based on a model parameter by a method according to an embodiment of the invention; applying, by the emitter, said predistortion function to a signal to obtain a predistorted signal; transmitting said predistorted signal.

In another aspect, it is proposed an emitter comprising at least one processing unit configured to execute the method of one of the embodiments of the invention.

In another aspect, it is proposed a method comprising: adapting a correction function based a model parameter by a method according to one of the embodiments of the invention; receiving a signal by the receiver; applying, by the receiver, said correction function to said received signal to obtain a corrected received signal.

This allows the receiver to correct the received signal for the distortions implied by the telecommunication channel, and to retrieve a signal which is as similar as possible to the signal that was sent by the emitter.

In another aspect, it is proposed a receiver comprising at least one processing unit configured to implement a method according to one of the embodiments of the invention.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

## Brief Description of Drawings

Other features, details and advantages will be shown in the following detailed description and on the figures, on which:

**Fig. 1**

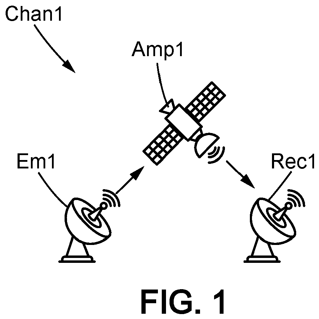

[Fig. 1] is a first example of telecommunication channel for the modeling of which the invention can be implemented.

**Fig. 2**

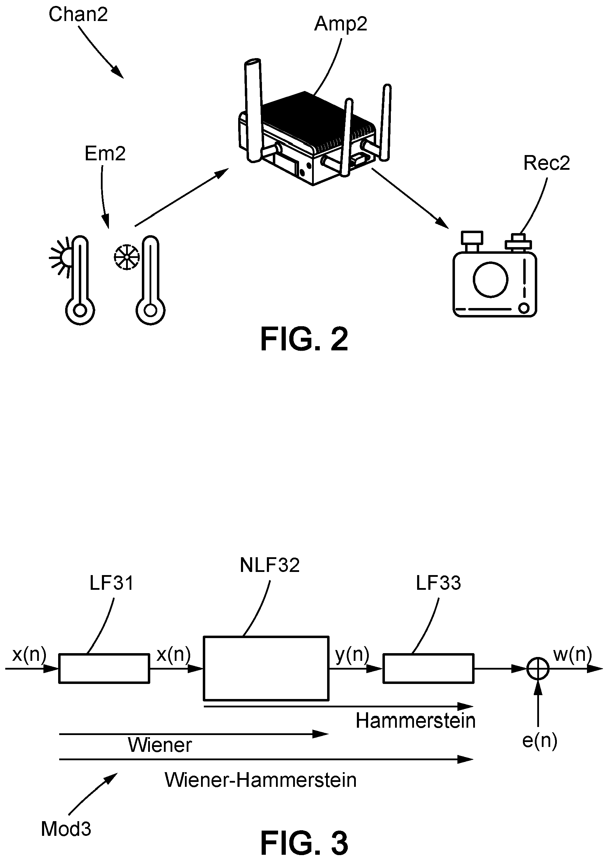

[Fig. 2] is a second example of telecommunication channel for the modeling of which the invention can be implemented.

**Fig. 3**
[Fig. 3] is an example of a Wiener-Hammerstein model for the parameter of which the invention can be implemented.

**Fig. 4**

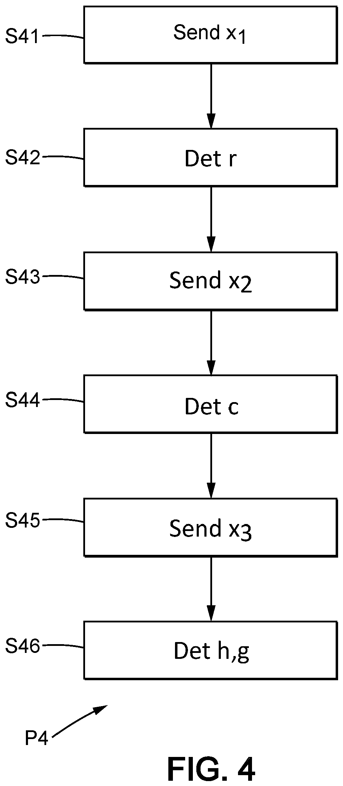

[Fig. 4] is a first example of a method in a number of embodiments of the invention.

**Fig. 5**

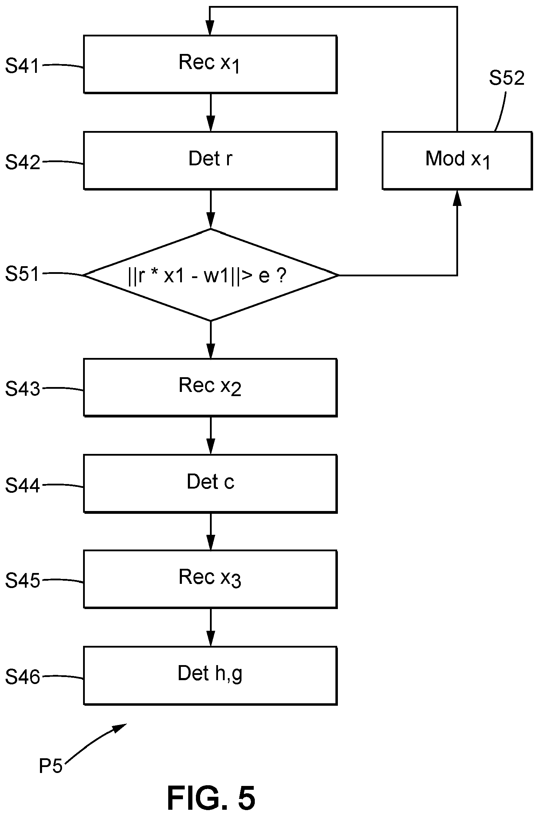

[Fig. 5] is a second example of a method in a number of embodiments of the invention.

**Fig. 6**

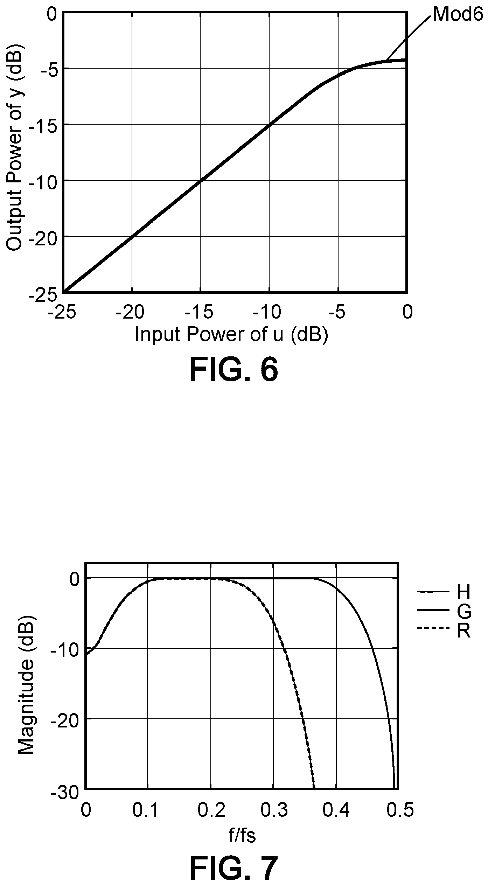

[Fig. 6] is an example of a model of an amplifier as a non-linear function in a number of embodiments of the invention.

**Fig. 7**

[Fig. 7] is an example of a band-pass filter which is the convolutional product of two linear filters in a number of embodiments of the invention.

**Fig. 8**

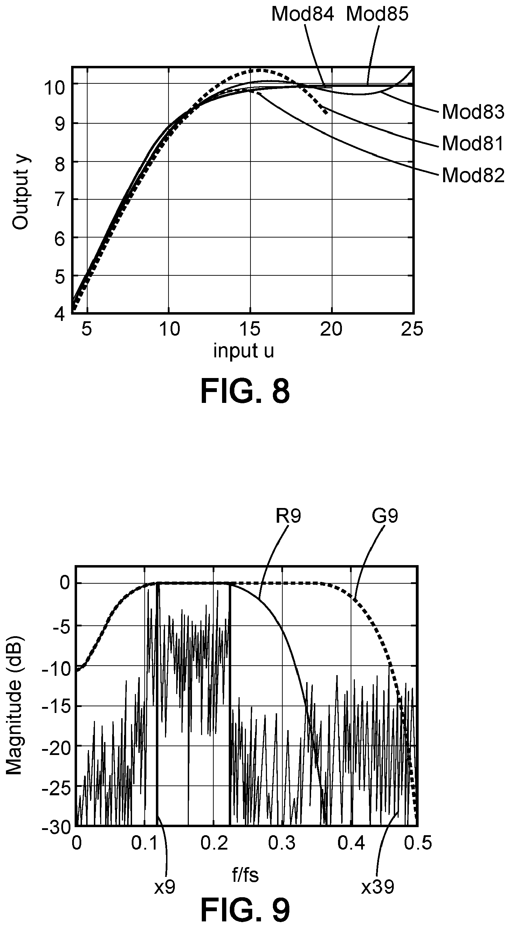

[Fig. 8] is a plurality of estimations of a non-linear function that model an amplifier according to a number of embodiments of the invention.

**Fig. 9**

[Fig. 9] is an example of a second pilot sequence, and a corresponding distorted signal at the output of an amplifier in a number of embodiments of the invention.

**Description of Embodiments**

It is now referred to figure 1.

Figure 1 is a first example of telecommunication channel for the modeling of which the invention can be implemented.

The channel Chan1 starts from an emitter Em1, which is a large satellite antenna that transmits messages to a receiver Rec1 through an Amplifier Amp1 located onboard a satellite.

The amplifier Amp1 is in this example a powerful amplifier which is used near its maximal amplification capacity, which causes non-linear distortion in the transmission channel.

It is now referred to figure 2.

Figure 2 is a first example of telecommunication channel for the modeling of which the invention can be implemented.

The channel Chan2 is a telecommunication channel wherein an emitter Em2, which is an IoT device (in this example a temperature sensor), transmits messages to a receiver Rec2, which is another IoT device (in this example a heat controller) through an Amplifier Amp2 located in a third IoT device, in this example a radio gateway.

The amplifier Amp2 is in this example a lightweight amplifier, which causes non-linear distortion in the transmission channel.

The channels Chan1 and Chan2 are provided by means of examples only of telecommunication channels for the modeling of which the invention can be implemented. The invention can more generally be implemented for the modeling of any telecommunication channel wherein the operation of an amplifier introduces non-linearities.

It is now referred to figure 3.

The figure 3 represents an example of a Wiener-Hammerstein model for the parameter of which the invention can be implemented.

The model Mod3 is a model of the "Wiener-Hammerstein" type. It is composed of a first linear filter LF31, a non-linear function NLF32, and a second linear filter LF33.

The first linear filter LF31, and the non-linear function NLF32 form a "Wiener" model, while the non-linear function NLF32, and the second linear filter LF33 form a "Hammerstein" model. The combination of the Wiener model and the Hammerstein model, formed by the first linear filter LF31, the non-linear function NLF32, and the second linear filter LF33 is called a "Wiener-Hammerstein" model.

A model of the Wiener-Hammerstein type may be used for example to model telecommunication channels affected by non-linear distortion, such as the channel Chant or the channel Chan2.

Each of the first linear filter LF31, the non-linear function NLF32, and the second linear filter LF33 is defined by values of parameters. A channel modeled by a model of the Wiener-Hammerstein type such as the model Mod3 can thus be defined if the values of the parameters of the first linear filter LF31, the non-linear function NLF32, and the second linear filter LF33 are all known.

In the figure 3 and the examples described below:

- $x(n)$ represents the signal sent by the emitter, and input of the first linear filter LF31 ;

- $u(n)$ represents the output of the first linear filter LF31, and input of the non-linear function NLF32 ;

- *y(n)* represents the output of the non-linear function NLF32, and input of the linear filter LF33 ;

- the output *w(n)* of the model is the sum of the output of the second linear filter LF33 and an estimated noise *e(n)*.

As discussed above, the parameters of the model need to be accurately known in order to correct the distortion of the telecommunication channel, either by using pre-distortion techniques at the emitter side, or by correcting the received signal at the receiver side.

One of the objectives of the invention is therefore to accurately parameter a model of a telecommunication channel, such as for example the model Mod3.

To this effect, the invention relies on the emission of pilot sequences by the emitter, which cause the reception of corresponding received sequence by the receiver, the received sequences being distorted by the channel. The corresponding notations can be introduced:

- $x = [x(1) \dots x(n) \dots x(N)]$ is a pilot sequence of length N ;

- $u = [u(1) \dots u(n) \dots u(N)]$ the signal at the output of the first linear filter LF31 (also noted *h*) ;

- $= [y(1) \dots y(n) \dots y(N)]$ the signal at the output of the non-linear function NLF32 (also noted *c(.)*) ;

- $w = [w(1) \dots w(n) \dots w(N)]$ the signal at the output of the second linear filter LF33 (also noted *g*), which is the output of the full channel.

The elements of the Wiener-Hammerstein model are described in more details below.

The first linear filter LF31, or *h*, has a length $L_1$. The output of this filter is *u(n)* where:

$$u(n) = \sum_{i=0}^{L_1-1} h(i)\, x(n-i).$$

*Equation 1*

The non-linear function NLF32, or *c*, is modelled as:

$$c(u(n)) = \sum_{k=1}^{K} \gamma(k) u^k(n).$$

*Equation 2*

One general assumption is that the non-linear function NLF32, or *c* is linear when the amplitude $|u(n)|$ is small enough, i.e.

$$c(u(n)) = \gamma(1)u(n) \text{ if } |u(n)| < \mu,$$

*Equation 3*

This assumption holds as most amplifiers exhibit a linear amplifying characteristic when the amplitude of the input signal is not too high. In some case, the characteristic with small amplitude may only be quasi-linear and we get:

$$c(u(n)) = \gamma(1)u(n) + \epsilon,$$

*Equation 4*

Meaning that the impact of the residual non-linearity is treated as a noise term $\varepsilon$.

The figure 6 represents an example of a model of an amplifier as a non-linear function in a number of embodiments of the invention.

The model Mod6 represents the power of the output $y$ of the non-linear function as a function of its input $u$. It can bee seen that the non-linearity occurs at high amplitudes only. At low amplitudes the output of the amplifier can be approximated a linear function of the input. This is because the non-linear effect occurs when the amplifier operates near saturation.

When $|u(n)|$ is small enough we say that the signal has a low amplitude. This notion of low or high amplitude can be established with respect to the saturation level of the amplifier, for example with respect to the peak to average power ratio. It can thus be determined in which case the amplitude is high or low enough for the non-linear function to be considered as linear or not, depending upon the type of amplifier.

It is worth noting that, if the invention will be exemplified through the parameter of a Wiener-Hammerstein model, it is more generally applicable to a model that comprises at least one linear filter, and a non-linear function. The invention is therefore also applicable to parameter a Wiener or a Hammerstein model.

The second linear filter g has a length $L_2$, and its output is:

$$w(n) = \sum_{i=0}^{L_2-1} g(i)y(n-i) + e(n).$$

*Equation 5*

Where e(n) is the noise in the channel.

It is now referred to figure 4.

The figure 4 represents a method P4 to parameter a model of a telecommunication channel, said communication channel comprising an emitter, a receiver, and at least one amplifier amplifying a signal sent by the emitter to the receiver.

The model comprises a series of at least one linear filter, and a non-linear function.

As discussed above, the model may be for example one of:

- a Wiener-Hammerstein model such as the model Mod3, comprising a series of a first linear filter, a non-linear function, then a second linear filter;

- a Wiener model, comprising a series of a linear filter then a non-linear function ;

- a Hammerstein model, comprising a series of a non-linear function, then a linear filter.

As will be explained in more details below, the method P4 is implemented, in part or in totality, by the emitter of the channel, for example the emitter Em1 or Em2.

The method P4 comprises a step S41 of sending to the receiver, by the emitter, a first pilot sequence $x_1$ , said first pilot sequence being a wideband sequence.

Stated otherwise, at step S41, the emitter sends to the receiver first pilot sequence $x_1$ which is a wideband sequence, i.e. a pilot sequence whose energy is spread over the whole, or at least a large part of frequency spectrum that may be used by the telecommunication channel.

The receiver thus receives a first received sequence $w_1$ that corresponds to the first pilot sequence $x_1$ sent by the emitter but is modified by the telecommunication channel.

As the first pilot sequence $x_1$ is a wideband sequence, the first received sequence $w_1$ is affected by the channel over the whole, or at least a large part of frequency spectrum that may be used by the telecommunication system. The band (or plurality of bands) of the at least one linear filter can therefore be inferred from the received sequence $w_1$.

The first pilot sequence may also have an amplitude low enough so that the first received sequence $w_1$ is not affected by the non-linear function. Indeed, the non-linearity of the non-linear function applied essentially for high amplitudes. As discussed above, the considered amplitude may be for example an average and/or maximal and/or peak amplitude of the pilot sequence.

Thus, in particular when the first pilot sequence $x_1$ is a wideband sequence with an amplitude low enough so that the first received sequence $w_1$ is not affected by the non-linear function (which means that the model can in this context be approximated as the at least one linear filter only), a comparison between the first pilot sequence $x_1$ filtered by the estimated model and the first received sequence $w_1$ allow determining in which bands the signal has been transmitted (i.e. in which bands the energy attenuation was low). This allows determining the band, or the plurality of bands, of the at least one linear filter.

The method P4 then comprises a step S43 of sending to the receiver, by the emitter, a second pilot sequence $x_2$ , said second pilot sequence being a band-limited sequence in the band of said at least one linear filter, parameters of said band being determined from the first received sequence $w_1$, and said second pilot sequence having an amplitude higher than an amplitude of the first pilot sequence.

The second pilot sequence $x_2$ has a higher amplitude than the first pilot sequence, so that the second received sequence is affected by the non-linearity of the non-linear function, while the first received sequence was not affected by the non-linearity of the non-linear function.

As the second pilot sequence $x_2$ comprises frequencies only in the band of at least one linear filter, this sequence not affected by the linear filters before the non-linear function.

Therefore, the second received pilot sequence $w_2$ corresponding to the second pilot sequence $x_2$ is affected by the non-linear function, and may be affected by the linear filters after the non-linear function (because the non-linear function modifies the spectrum of the signal), but not by the linear filters before the non-linear function.

The comparison between the second received pilot sequence $w_2$ and the second pilot sequence $x_2$ therefore allows defining values of parameters of the non-linear function, or, if the model comprises at least one linear filter after the non-linear function, parameters of a cascade of the non-linear function and at least one linear filter after the non-linear function in the model.

The method therefore allows determining the parameters of a model of telecommunication channels defined as a series of at least one linear function, and a non-linear function, such as for example a Wiener-Hammerstein model.

The values of the parameters of the model can be identified accurately, because the model does not need to be approximated.

The estimation of the model of the telecommunication channel allows improving the communication, for example reduce the distortion of the signals when using the telecommunication channel.

This for example allows using an amplifier at its maximum power, while avoiding non-linear distortion of the received signal. The avoidance of distortion of the received signal allows for example avoiding interferences with other frequency carriers.

One of the key points of the invention is thus to determine the second pilot sequence $x_2$ based upon the first pilot sequence $x_1$, and the first received sequence $w_1$. This can be made by a step S42 between step S41 and step S43. The step S42 may be for example performed by the emitter or the receiver.

In some embodiments, the step S42 is performed by the receiver, as the receiver already receives the first received sequence $w_1$, it further needs to know the first pilot sequence $x_1$.

This may be performed for example by:

- using a predefined first pilot sequence $x_1$. In this case, the receiver is aware in advance of the first pilot sequence $x_1$ that will be sent ;

- receiving by the receiver, from the emitter, at least one data allowing to determine the first pilot sequence. Such data may be for example:

  ○ the first pilot sequence $x_1$ itself, received through another channel ;

  ○ an index of the first pilot sequence $x_1$ in a codebook ;

  ○ parameters allowing to reconstruct the first pilot sequence $x_1$. For example, the band and average amplitude of the first pilot sequence $x_1$ may allow exactly reconstructing the first pilot sequence ;

  ○ etc.

In such embodiments, once the receiver has determined the second pilot sequence $x_2$, the receiver can then send back to the emitter data that allow the emitter to identify the second pilot sequence $x_2$. Such data may be:

- the second pilot sequence $x_2$ itself;

- an index of the second pilot sequence $x_2$ in a codebook ;

- parameters of the second pilot sequence $x_2$ ;

- etc.

In other embodiments of the invention, the step S42 of determination of the second pilot sequence $x_2$ is performed by the emitter. In such instance, as the emitter is already aware of the first pilot sequence $x_1$, it needs to receive an input representative of the first received sequence $w_1$ from the receiver. Such input may be:

- the first received sequence $w_1$ itself;

- parameters of the first received sequence $w_1$ ;

- parameters of the band of the at least one linear filter. These parameters are representative of the first received sequence, because they correspond to the band in which the first received sequence is received, and allow determine the second pilot sequence $x_2$.

- etc.

It is thus apparent that, in order to retrieve the second pilot sequence $x_2$ , the emitter may receive from the receiver data comprising at least one of:

- the second pilot sequence ;

- an index of the second pilot sequence in a codebook ;

- the first received sequence $w_1$ ;

- parameters of the first received sequence $w_1$ ;

- parameters of the band of the at least one linear filter;

- etc.

As noted above, the second pilot sequence $x_2$ is such that it is in the band of the at least one linear filter, and has an amplitude high enough to be affected by the non-linear function.

In a number of embodiments of the invention, the method P4 further comprises a step S44 of determining from a second received sequence $w_2$ corresponding to the second pilot sequence $x_2$ sent by the emitter, parameters of the non-linear function, or parameters of a cascade of the non-linear function and at least one linear filter after the non-linear function in the model.

The step S44 may be performed at the emitter or the receiver side, and allows in practice obtaining the parameters of the model including the non-linear function.

In a number of embodiments of the invention, the model comprises a first linear filter before said non-linear function, and a second linear filter after the non-linear function (which is for example the case of the Wiener-Hammerstein model Mod3), and a third pilot sequence $x_3$ is used. To this effect, in such embodiments, the method P4 further comprises a step S45 of sending to the receiver by the emitter, a third pilot sequence $x_3$, said third pilot sequence being a band-limited sequence in the band of said at least one linear filter and having an amplitude lower than the amplitude of the second pilot sequence.

Stated otherwise, the third pilot sequence $x_3$ has the same band than the second pilot sequence $x_2$, but a smaller amplitude (for example a smaller average and/or maximum and/or peak amplitude). For example, the third pilot sequence $x_3$ may have the same amplitude than the first pilot sequence $x_1$. The emission of the third pilot sequence $x_3$ by the emitter causes the reception of a corresponding third received pilot sequence $w_3$ by the receiver.

Thus, the energy of the third pilot sequence $x_3$ is concentrated in the band of at least one linear filter, and its amplitude is low enough to avoid being affected by the non-linear function during the transmission. This therefore allows obtaining the values of the parameters of the linear filters from the already known parameters.

It is apparent that the same data are needed to determine the third pilot sequence $x_3$ than the second pilot sequence $x_2$. The third pilot sequence $x_3$ sequence may thus be determined based on the first pilot sequence $x_1$, and the first received sequence $w_1$. All the discussions relative to the exchange of data between the emitter and the receiver for the determination of the third pilot sequence $x_3$ are therefore respectively applicable.

The method P4 may thus further comprise a step S46 of determination of parameters of the first linear filter (such as for example the filter LF31) and parameters of the second linear filter (such as for example the filter LF33) from a third received sequence $w_3$, and from parameters of the band of the at least one linear filter.

Stated otherwise, the third received sequence $w_3$ and third pilot sequence $x_3$ may allow determining, from the band of the two linear filters, parameters of the first and second linear filters respectively.

Thus, all the parameters of a model comprising two linear filters and a non-linear function such as a Wiener-Hammerstein model can be determined.

The step S46 may be performed either at the emitter or receiver side. As all the step that require the knowledge of both a pilot sequence, and the corresponding received sequence, this may be performed:

- at the receiver side, by receiving from the emitter, in addition to the received sequence, at least one data allowing to obtain the corresponding pilot sequence, for example:

  - the pilot sequence itself, through another channel ;

  - an index of the pilot sequence in a notebook ;

  - parameters of the pilot sequence ;

  - etc.

- at the emitter side, by receiving, from the receiver, at least one data allowing to obtain the corresponding received sequence, for example:

  - the received sequence itself;

  - parameters of the received sequence ;

  - etc.

The method P4 is provided by means of non-limitative example only of a method according to the invention. However, other methods may be used. For example, if the model of the telecommunication channel is a Wiener model, the emission of a third pilot sequence $x_3$ is not needed, because the emissions of the first pilot sequence, and the second pilot sequence allow directly identifying the parameters of the linear filter, and the non-linear function respectively.

Once the model is accurately parameter using the method P4, it can be used for performing accurate data transmission through the channel.

A first option consists in performing predistortion, which means that the signal to transmit is predistorted by the emitter before the emission, so that the received signal corresponds to the signal which was intended to receive.

In order to achieve the predistortion, the method can further comprise a step of adapting a predistortion function based on the model.

Then, each time a signal is to be transmitted, the emitter can:

- apply the predistorsion function to a signal to obtain a predistorted signal ;

- then transmit the predistorted signal.

Thus, the predistorted signal is sent instead of the initial signal to transmit, so that the message which is received by the receiver is as similar as possible to the message to transmit.

Another option consists in using the model to correct the received signal, at the receiver side.

To this effect, a correction function can be adapted based on the model.

Then, upon the reception of a signal by the receiver, the receiver can apply the correction function to said received signal to obtain a corrected received signal.

Thus, the receiver can correct the received signal for the distortions implied by the telecommunication channel, and retrieve a signal which is as similar as possible to the signal that was sent by the emitter.

Now that the reader is familiar with the exchanges of sequences between the emitter and the receiver, the invention will be exemplified using the notations defined in figure 3. It is however worth noting that the notations of figure 3, and equations below are provided by means of illustrative example only, and do not limit the scope of the invention.

The signals resulting from the emission of the first pilot sequence will be identified with the subscript 1, so the output of the first linear filter LF31, or $h$, the output of the non-linear function NLF32, or c, and the received sequence will be respectively denoted $u_1$ $y_1$ and $w_1$ when the result from the emission of the first pilot sequence $x_1$.

The signals resulting from the emission of the first pilot sequence will be identified with the subscript 2, so the output of the first linear filter LF31, or $h$, the output of the non-linear function NLF32, or $c$, and the received sequence will be respectively denoted $u_2$, $y_2$ and $w_2$ when the result from the emission of the second pilot sequence $x_2$.

The signals resulting from the emission of the first pilot sequence will be identified with the subscript 3, so the output of the first linear filter LF31, or $h$, the output of the non-linear function NLF32, or $c$, and the received sequence will be respectively denoted $u_3$, $y_3$ and $w_3$ when the result from the emission of the third pilot sequence $x_3$.

In a preliminary step the first pilot sequence $x_1$ is generated, or selected in a codebook. The first pilot sequence $x_1$ can be chosen such that $u_1 = x_1 * h$ has low amplitude, for example a low amplitude. As explained above, this can be determined a priori by a knowledge of the amplifier. Moreover, $x_1$ may also be selected as a wideband sequence to identify the relevant spectrum of $h$.

In general, the pilot sequences can be defined as a sum of sinusoids of equal power to control the band amplitude and amplitude of the signal to obtain the desired effect relative to the band of the linear filters, and the non-linear function.

The first pilot sequence $x_1$ can be defined so that the phases minimize a amplitude of the signal or the predicted amplitude of $u_1$, so that a signal can be obtained in a desired frequency band amplitude can be defined to avoid non-linear effects from the non-linear function.

$x_1$ can for example be a sum of sum of N sinusoids, in case of real signals :

$$x_1(n) = \sum_{k=1}^{N} \sqrt{\frac{p_k}{2}} \cos\left(2\pi\frac{kn}{T} + \theta_k\right)$$

*Equation 6*

Or in case of complex signals:

$$x_1(n) = \sum_{k=1}^{N} \sqrt{\frac{p_k}{2}} \exp j\left(2\pi\frac{kn}{T} + \theta_k\right)$$

*Equation 7*

The variable $T$ is the period of signal and $p_k$ is the power corresponding to the kth frequency. The phase $\theta_k$ can be chosen such that the amplitude is minimized. For real signals, this can be done as in M. Schroeder, Synthesis of low-peak-factor signals and binary sequences with low autocorrelation, IEEE Trans. Inf. Theo., Vol 16, No 1, Jan 1970 for instance. For complex signals, this can be done as explained in D. Chu, Polyphase codes with good periodic correlation properties, vol.18, no. 4, pp. 531 - 532, Jul. 1972. The phase $\theta_k$ can be defined as:

$$\theta_k = \pi \left\lfloor \frac{k^2}{2M} \right\rfloor [2\pi]$$

*Equation 8*

If the filter $h$ has a linear phase, the amplitude of $u_1$ is the same as the one of $x_1$.

The coefficients of the sinusoid may also be defined so as to minimize the Pear Average Ratio (PAR):

$$\underset{\theta \in [0;2\pi]^M}{minimize} \quad \underset{j\epsilon[M_0,M]}{max} \quad PAR(x^j)$$

*Equation 9*

Where represents a sum of sinusoid of equal power of the form:

$$x_1^M(n) = \sum_{k=1}^{M} cos(2\,\pi f_1 kn + \theta_k)$$

*Equation 10*

Where $f_1$ is the fundamental frequency, equal to $\frac{1}{T}$ , and where the PAR of a signal is defined by:

$$PAR(x) = \frac{max_n|x(n)|^2}{\sigma_x^2}$$

*Equation 11*

$M_0$ can be selected based on the context, for example with $M_0 = \frac{M}{2}$ . Thus, the values of $\theta_k$ of each of the sinusoid that minimize the PAR can be determined, for example using a genetic algorithm.

Another possible first pilot sequence $x_1$ is pseudo white random pilot sequence. In this case the amplitude of the signal $u_1$ is less sensitive to the phase of the filter, as $u_1$ remains a Gaussian signal. The amplitude may depend in this case of the autocorrelation function of the filter.

The linear filter $r = h * g$, which is the convolutional product of the filters $h$ and $g$, is then identified, for example at step S42.

The figure 7 represents an example of linear filter $r$ which is the convolutional product of the filters $h$ and $g$.

The horizontal axis represents a normalized frequency (e.g. a ratio between the frequency of the signal $f$ and the sampling frequency $f_s$, and the vertical axis represents the attenuation of the convolutional filter.

The figure 7 shows that the first filter $h$ (which corresponds to the filter LF31 in figure 3) is a low-pass filter, the second filter $g$ (which corresponds to the filter LF33 in figure 3) is a high-pass filter, and that the linear filter $r$ resulting from the convolution of filters $h$ and $g$ is a band-pass filter.

As will be explained in more details below, the step S42 allows determining the band of the filter r in this example.

For example, the parameters of the band of the filter r are determined under the assumption that the first received sequence is equal to the application of said band to the first pilot sequence, that is to say that the non-linear function can be approximated by a linear function due to the low amplitude of the first pilot sequence $x_1$.

In such case, the parameters of the band filter can be estimated because the model can be approximated as the at least one linear filter, modeled as a single filter, so the parameters of the band filter can be calculated from the first pilot sequence, and the first received sequence.

In practice, this can be performed by using the least-square method to calculate :

$$\widehat{r^T} = (X^T X)^{-1} X^T w^T,$$

*Equation 12*

Where $x_i$ = [x(i), ...,x(i - L)], $L$ is the length of the filter $r$ and $X^T = [x_1^T, ..., x_N^T]$ . Therefore, the matrix X corresponds to successive shifts of x by 1, in order to optimize the parameters of r on all the possible shifts of $x$. The same notations will be applied for other estimations of filters based on the pilot and received sequences.

Once the filter $r$ is estimated, the second pilot sequence $x_2$ can be selected or generated in order to be in the band of the filter r, and have an amplitude higher than $x_1$, for example an amplitude high enough to be affected by the non-linearity of the function c. The second pilot sequence $x_2$ is then emitted at step S43, and the step S44 is executed based on the second pilot sequence $x_2$, and the corresponding second received sequence $w_2$.

In this example, the step S44 relies on a number of assumptions.

First of all, the non-linear function is defined as a polynomial having only odd order terms.

In addition, the second pilot sequence raised to the power of each of the odd order terms of the polynomial is concatenated in a single sequence.

As the second sequence is a band-limited sequence in the band of the two linear filters, it is assumed that the first linear filter LF31 does not modify the sequence. Thus for the purpose of step S44, in this example, we have $u_2 = x_2$. $u_2$ may be affected by a short delay compared to $x_2$. The delay may be for example a predefined delay, or a delay that minimizes an error of the model. On the other hand, the second linear filter LF33 may impact the received sequence $w_2$, because of the non-linearity of the non-linear function NLF32.

We will demonstrate below that, under this assumption, it is possible to determine the parameters of a cascade of the non-linear function and the second linear filter, i.e of the Hammerstein model.

To better understand the assumptions for step S44, it is now referred to figure 9.

Figure 9 is an example of a second pilot sequence, and a corresponding distorted signal at the output of an amplifier in a number of embodiments of the invention. The horizontal axis represents a normalized frequency (e.g a ratio between the frequency of the signal $f$ and the sampling frequency $f_s$), and the vertical axis represents the attenuation of the convolutional filter.

Figure 9 represents the frequency response of:

- The filter $r$, in the curve R9 ;

- The filter $g$, in the curve G9 ;

- the second pilot sequence $x_2$, in the curve x9 ;

- the second pilot sequence $x_2$ raised to the power of three : $x_2^3$, in the curve x39 ;.

It can be seen that, even if the second pilot sequence $x_2$ is in the band of the filter $r$, the non-linear function will generate signals such $x_2^3$ which are spread on the whole spectrum, and will be subject to filtering by the linear filter $g$. This is why, in the currently discussed example, the parameters of the cascade of the non-linear function $c$ and the linear filter $g$ are first jointly determined.

Under the notations described above, a signal w(n) received by the receiver can be rewritten as:

$$w_2(n) = \sum_i g(i)\left(\sum_k \gamma(k)u_2{}^k(n-i)\right) = \sum_k \sum_i \gamma(k)g(i)u_2{}^k(n-i) = \sum_k \sum_i g'_k(i)u_2{}^k(n-i)$$

*Equation 13*

Where:

- $k$ represent the odd order terms of the polynomial that define the non-linear function ($k$ = 1, 3, 5 ...) ;

- $g'_k(i)$ represent the Hammerstein model (i.e the cascade of the non-linear function NLF32 and the second linear filter LF33), with $g' = [g'_1(0), ..., g'_1(L_2-1), ..., g'_K(0), ..., g'_K(L_2-1)]$ .

The received sequence can thus be rewritten as the sum of K signals (each corresponding to one of the polynomial orders of the non-linear function filtered by $g$):

$$w_2(n) = \gamma(1) \cdot g * u_2 + \gamma(3) \cdot g * u_2{}^3 + \cdots$$

*Equation 14*

The parameters of the single filter can thus be estimated as the parameters that minimize a difference between said second received sequence and an estimate of said second received sequence by filtering the second pilot sequence by said single sequence. For example, the single sequence can be written as $\Phi(u_{2_i}) = \left[u_{2_i}, u_{2_i}^2, ..., u_{2_i}^K\right]$ and $\Phi(U_2)^T = [\Phi(u_{2_1})^T, ..., \Phi(u_{2_N})^T]$, where $u_{2_i} = [u_2(i), ..., u_2(i-L_2)]$, $L_2$ is the length of the second linear filter LF33. The coefficients of the Hammerstein model can thus be estimated using the least-square method as:

$$\widehat{g'}^T = \left(\Phi(U_2)^T \Phi(U_2)\right)^{-1} \Phi(U_2)^T w^T$$

*Equation 15*

In some instances, the accuracy of $\widehat{g'}_3$ is better than the one of $\widehat{g'}_1$. In such case, one option to increase the accuracy of the estimation of the filter consists in replacing $\widehat{g'}_1$ by a value estimated from $\widehat{g'}_3$. This can be done by estimating the ratio $\gamma(1)' = \gamma(1)/\gamma(3)$.

To this effect, the second received sequence w is first filtered by the band-pass filter r to obtain a band-filtered second received sequence w':

$$w_2' = r * w_2$$

*Equation 16*

Then, it is possible to apply an estimation $\widehat{g_3}$ a third-order coefficient of said single filter and said band-pass filter to the second pilot sequence to estimate a contribution of the first order term to the band-filtered second received sequence:

$$y_{21}' = r * \widehat{g_3} * u_2$$

*Equation 17*

It is also possible to apply the estimation of the third-order coefficient of said single filter and said band-pass filter to a cubic power of the second pilot sequence to estimate a contribution of the third order term to the band-filtered second received sequence:

$$y_{22}' = r * \widehat{g_3} * u_2^3$$

*Equation 18*

The output of the model can thus be estimated as:

$$\widehat{w_2}' = \gamma(1)' y_{21}' + y_{22}'$$

*Equation 19*

Which can be rewritten as:

$$\widehat{w_2}' - y_{22}' = \gamma(1)' y_{21}'$$

*Equation 20*

It is then possible to replace the parameters of the single filter relative to the first order term by an estimation of said parameters of the single filter relative to the first order term performed based on the band-filtered second received sequence, said estimated contribution of the first-order term, and said estimation of the contribution of the third-order term.

This can be done for example by first estimating the coefficient $\gamma(1)'$ as:

$$\gamma(1)' = \frac{y'_{21} \cdot (w' - y'_{22})^T}{\left\| y'_{21} \right\|^2}$$
*Equation 21*

Then, replacing the value of $\widehat{g_1}$ by an estimation based on $\widehat{g_3}$ :

$$\widehat{g_1} = \gamma(1)'^{\star} \; \widehat{g_3}$$
*Equation 22*

This estimation may be more accurate because the parameters of the single filter relative to the third-order terms generate signals having energy outside of the band of the band-pass filter, and therefore more sensitive to the high-pass filter defined by the second linear filter.

Performing this on signals in the band of the band-pass filter allows performing the operations where most of the energy of the signal is concentrated.

The figure 8 represents a plurality of estimations of a non-linear function that model an amplifier according to a number of embodiments of the invention.

As explained above, in a number of embodiments of the invention the non-linear function is a polynomial function that has only odd-order terms, and the non-linear function primarily aims at modeling the behavior of the amplifier in the telecommunication channel. The non-linear function may notably be a third-order or a fifth-order polynomial. The accuracy of the estimation is therefore different depending upon the maximal order of the polynomial, but also the maximal amplitude of the signal u which is input to the non-linear function.

The figure 8 represents:

- a curve Mod81 that represents an estimate of the non-linear function which is a third-order model, with a maximal amplitude of |u| which is equal to 20 ;

- a curve Mod82 that represents an estimate of the non-linear function which is a third-order model, with a maximal amplitude of |u| which is equal to 16 ;

- a curve Mod83 that represents an estimate of the non-linear function which is a fifth-order model, with a maximal amplitude of |u| which is equal to 25 ;

- a curve Mod84 that represents an estimate of the non-linear function which is a fifth-order model, with a maximal amplitude of |u| which is equal to 20 ;

- a curve Mod85 that represents an ideal Rapp Model of the amplifier.

It can be seen that the accuracy of the estimation depends upon both the order of the polynomial, and the maximal amplitude of |u|. For example, a 5th-order polynomial is generally considered as more accurate than 3rd order polynomial but requires significantly more data to be properly trained. Therefore, in many cases, a 3rd order polynomial provides better results than 5th-order polynomial. This observation can be generalized to higher-level polynomials.

In this example, the third order polynomial provides a good estimate of the amplifier model when the maximal amplitude of |u| is 16, while the fifth order polynomial provides a much better estimation estimate of the amplifier model when the maximal amplitude of |u| is 25.

It is not always possible to determine in advance which polynomial order will provide the most accurate estimation.

Thus, in order to obtain the most accurate estimation, the step S44 of determination of the cascade of the non-linear function NLF32 and the second linear filter LF33 can be repeated for a plurality of candidate non-linear functions corresponding respectively to a plurality of polynomials having different numbers of odd order terms. Then, the non-linear function can be selected as the non-linear function that minimize an error function among the plurality of candidate non-linear functions. For example, if the least square error method is used to parameter the cascade, the non-linear function that causes the minimal error at the output of the least square can be selected.

This allows selecting the optimal polynomial order without any a priori assumption.

For the purpose of this determination, the maximal amplitude of |u|, which is in practice approximated as the maximal amplitude of the |x| for the second pilot sequence which is in the band of the filter r, is equal to an expected maximum amplitude of the signals to be transmitted by the transmitter.

Thus, the selection of the optimal polynomial is performed in an amplitude range that comprises the maximum intensities of all the foreseeable signals to be transmitted by the transmitter.

In this example, once the parameters of the band-pass filter $r$ (which is a convolution of the first linear filter LF31, or $h$, and the second linear filter LF33, or $g$) are determined at step S42, and the parameters of the cascade of the non-linear function NLF32, or $c$, and the second linear filter LF33, or $g$ are determined at step S44, a third pilot sequence $x_3$ can be emitted at step S45, and the step S46 can be performed to determine the parameters of the first linear filter LF31 and parameters of the second linear filter LF33 based on the third pilot sequence $x_3$, ant the third received sequence $w_3$.

As explained above, the third pilot sequence $x_3$ is such that it falls in the band of the filter r and has an amplitude low enough to avoid causing non-linearities. For example, $x_3$ can be determined to have the same spectrum as $x_2$ and the same amplitude as $x_1$.

The step S46 comprises in this example a first sub-step of determining a scaling factor $\alpha$, equal to the inverse of a first-order coefficient of the non-linear function $\alpha = 1/\gamma(1)$.

As $x_3$ has an amplitude low enough to avoid causing non-linearities, only the first order of the cascade can be taken into account:

$$\widehat{w_3} = \alpha \cdot \widehat{g_1} * u_3$$

*Equation 23*

$\alpha$ can thus be estimated as:

$$\alpha = \frac{(\widehat{g_1} * u_3) \cdot w_3{}^T}{\left\|\widehat{g_1} * u_3\right\|^2}.$$

*Equation 24*

Once the scaling factor $\alpha$ is known, step S46 comprises in this example a second sub-step of determining parameters of the second linear filter $\hat{g}$ based on $\alpha$ and the known parameters of the cascade $\widehat{g_1}$, for example by :

$$\hat{g} = \alpha \cdot \widehat{g_1}.$$

Then the step S46 comprises in this example a third sub-step of determining, from said parameters of the band of the at least one linear filter, and said parameters of the second linear filter, parameters of the first linear filter. Stated otherwise, the filter $h$ is deduced from the values of $r$ and $g$.

To this effect, $r$ can be expressed as a function $g$ and $h$ via a matrix operation as:

$$r^T = G \cdot h^T,$$

*Equation 25*

Where $G$ is the matrix:

$$G = \begin{bmatrix} g_0 & 0 & 0 & \cdots \\ g_1 & g_0 & 0 & \cdots \\ g_2 & g_1 & g_0 & \cdots \\ \vdots & \vdots & \vdots & \cdots \\ g_{L_2} & g_{L_2-1} & g_{L_2-2} & \cdots \\ 0 & g_{L_2} & g_{L_2-1} & \cdots \\ \vdots & \ddots & \ddots & \ddots \end{bmatrix}.$$

Then, $h$ is estimated via the least-square algorithm as:

$$\widehat{h^T} = \left(G^T \hat{G}\right)^{-1} G^T r^T$$

*Equation 26*

The value of $\overset{\wedge}{g}$ can then be obtained directly from the values of $\gamma(1)$, $\gamma(3)$ etc. and the values of $\widehat{g_1}$, $\widehat{g_3}$, etc.

This example demonstrates that the values of parameters of the whole Hammerstein-Model can be obtained thanks to the method of the invention. The detailed example above is however provided by means of non-limitative example only, and it may be adapted to other kinds of model, such as for example a Hammerstein or a Wiener model that require simpler calculations.

For example, the use of the third pilot sequence $x_3$ would not be required if the model is a Wiener model, because the second pilot sequence allows obtaining directly the parameters of the non-linear function.

It is now referred to figure 5.

Figure 5 represents a second example of a method in a number of embodiments of the invention.

The method P5 comprises all the steps of the method P4.

As explained above, it is critical that the first received sequence $w_1$ is not affected by the non-linear function.

This can be verified a priori by providing a first pilot sequence $x_1$ of low amplitude.

In order to further ensure that the first received sequence $w_1$ is not affected by the non-linear function, the method P5 comprises, in addition of the steps of the method P4:

- At the output of step S42, a step S51 of verifying if the first received sequence is affected by the non-linear function ;

- if the first received sequence is affected by the non-linear function:

  - a step S52 modifying the first pilot sequence so as to reduce its amplitude ;

  - a return to step S41 ;

- if the first received sequence is not affected by the non-linear function, the step S43 is executed.

Stated otherwise, if it is detected that the first received sequence $w_1$ is affected by the non-linear function, the amplitude of the first pilot sequence $x_1$ is reduced, and the updated pilot sequence is sent again, until the first received sequence $w_1$ is no more affected by the non-linear function.

This ensures that the first processing sequence has an amplitude low enough to avoid the non-linearity of the non-linear function, and thus that the band-pass filter accurately represents the convolution of the low-pass filter and the high-pass filter.

The verification at step S51 can be performed by :

- calculating a norm of a difference between the first received sequence $w_1$, and an application of an estimate of the at least one filter to the first pilot sequence $x_1$;

- if the norm is higher than an expected noise of the channel, outputting that the first received sequence is affected by the non-linear function.

For example, if the model is the model Mod3, the step S51 can be performed by verifying if:

$$|\hat{r} * x_1 - w_1| < \varepsilon$$

*Equation 27*

Wherein:

- $\overset{\wedge}{r}$ is the estimate of the band-pass filter at the output of step S42 ;

- $\varepsilon$ is a quantity of the order of magnitude of the expected noise of the channel.

Stated otherwise, if $x_1$ has an amplitude low enough so that $w_1$ is not affected by the non-linear function, $w_1$ will be substantially equal to $\hat{r} * x_1$, and the Equation 27 will be complied with.

This disclosure is not limited to the method, emitter, receiver and system described here, which are only examples. The invention encompasses every alternative that a person skilled in the art would envisage when reading this text.


**Claims**

1. A method (P4) to parameter a model (Mod3) of a telecommunication channel (Chant, Chan2),

   - said communication channel comprising an emitter (Em1, Em2), a receiver (Rec1, Rec2), and at least one amplifier (Amp1, Amp2) amplifying a signal sent by the emitter to the receiver ;
   - said model comprising a series of at least one linear filter (LF31, LF33) , and a non-linear function (NLF32);
   - said method comprising:

      a) sending to the receiver (S41), by the emitter, a first pilot sequence $x_1$ , said first pilot sequence being a wideband sequence;
      b) sending to the receiver (S43), by the emitter, a second pilot sequence $x_2$, said second pilot sequence being a band-limited sequence in a band of said at least one linear filter, parameters of said band being determined from a first received sequence $w_1$ corresponding to the first pilot sequence $x_1$ sent by the emitter, and said second pilot sequence having an amplitude higher than an amplitude of the first pilot sequence.

2. The method of claim 1, wherein the second pilot sequence $x_2$ is determined by the emitter using data received from the receiver, said data comprising at least one of:

   - the second pilot sequence ;
   - an index of the second pilot sequence in a codebook ;
   - the first received sequence $w_1$ ;
   - parameters of the first received sequence $w_1$ ;
   - parameters of the band of the at least one linear filter.

3. The method of one of claims 1 or 2, further comprising:

      d) determining (S44), from a second received sequence $w_2$ corresponding to the second pilot sequence $x_2$ sent by the emitter, parameters of the non-linear function, or parameters of a cascade of the non-linear function and at least one linear filter after the non-linear function in the model.

4. The method of one of claims 1 or 3, wherein said model comprises a first linear filter before said non-linear function, and a second linear filter after the non-linear function.

5. The method of claim 4, depending upon claim 3, wherein:

   - the non-linear function is defined as a polynomial having only odd order terms ;
   - the second pilot sequence raised to the power of each of the odd order terms of the polynomial is concatenated in a single sequence;
   - said parameters of the first linear filter (LF31) and parameters of the second linear filter (LF33) are determined (S46) based at least on the following steps:

      - modeling said cascade of the non-linear function and the second linear filter as a single filter;
      - estimating the parameters of said single filter that minimize a difference between said second received sequence and an estimate of said second received sequence by filtering the second pilot sequence by said single sequence.

6. The method of the preceding claim, wherein:

   - said polynomial comprises a first order term and a third order term ;
   - said parameters of the cascade of the non-linear function (NLF32) and the second linear filter (LF33) are further determined (S44) from the second received sequence $w_2$ by:

- filtering said second received sequence by a band-pass filter obtained as a convolution of said first linear filter and said second linear filter to obtain a band-filtered second received sequence;
- filtering the second pilot sequence by an estimation of the third-order coefficient of said single filter and said band-pass filter to estimate a contribution of the first order term to the band-filtered second received sequence ;
- filtering a cubic power of the second pilot sequence the second pilot sequence by the estimation of the third-order coefficient of said single filter and said band-pass filter to estimate a contribution of the third order term to the band-filtered second received sequence ;
- estimating a ratio between a first order coefficient of the non-linear function and a third order coefficient of the first order function based on band-filtered second received sequence, said contribution of the first order term to the band-filtered second received sequence and said contribution of the third order term to the band-filtered second received sequence ;
- replacing an estimation of the first-order coefficient of said single filter by the estimation of the first-order coefficient of said single filter multiplied by said ratio.

7. The method of one of claims 5 and 6, comprising:

- repeating the determination (S44) of the cascade of the non-linear function (NLF32) and the second linear filter (LF33) for a plurality of candidate non-linear functions corresponding respectively to a plurality of polynomials having different numbers of odd order terms ;
- selecting, among said plurality of non-linear function, a non-linear function that minimize an error function.

8. The method of one of claims 4 to 7, further comprising:

e) sending to the receiver (S45), by the emitter, a third pilot sequence $x_3$, said third pilot sequence being a band-limited sequence in the band of said at least one linear filter and having an average amplitude lower than the average amplitude of the second pilot sequence.

9. The method of the preceding claim, wherein:

- parameters of a cascade of the non-linear function (NLF32) and the second linear filter (LF33) are determined (S44) from the second received sequence $w_2$;
- parameters of the first linear filter (LF31) and parameters of the second linear filter (LF33) are determined (S46) from a third received sequence $w_3$ corresponding to the third pilot sequence $x_3$ sent by the emitter, and from parameters of the band of said at least one linear filter.

10. The method of the preceding claim, wherein said parameters of the first linear filter (LF31) and parameters of the second linear filter (LF33) are determined based at least on the following steps:

- determining a scaling factor $\alpha$, equal to the inverse of the coefficient corresponding to the first order term of the non-linear function ;
- determining, from said scaling factor $\alpha$, and said parameters of the cascade of the non-linear function and the second linear filter, parameters of the second linear filter;
- determining, from said parameters of the band of the at least one linear filter, and said parameters of the second linear filter, parameters of the first linear filter.

11. The method of any of the preceding claims comprising:

- verifying (S51) if the first received sequence is affected by the non-linear function ;
- if the first received sequence is affected by the non-linear function:

  - modifying (S52) the first pilot sequence so as to reduce its amplitude ;
  - going back to step a);

- if the first received sequence is not affected by the non-linear function, going to step b).

12. The method of the preceding claim, wherein said step of verifying if the first received sequence is affected by the non-linear function comprises:

- calculating a norm of a difference between the first received sequence, and an application of an estimate of the at least one filter to the first pilot sequence ;
- if the norm is higher than an expected noise of the channel, outputting that the first received sequence is affected by the non-linear function.

13. The method of one of claims 1 to 12, further comprising:

- adapting a predistortion function based on said model ;
- applying, by the emitter, said predistortion function to a signal to obtain a predistorted signal;
- transmitting said predistorted signal.

14. An emitter comprising at least one processing unit configured to execute the method of one of claims 1 to 13.

15. Computer software comprising instructions to implement at least a part of a method according to one of claims 1 to 13 when the software is executed by a processor.

FIG. 1

Chan2

Amp2

Em2

Rec2

**FIG. 2**

LF31      NLF32      LF33

$x(n)$    $x(n)$    $y(n)$    $w(n)$

$e(n)$

Hammerstein

Wiener

Wiener-Hammerstein

Mod3

**FIG. 3**

FIG. 4

S41 — Rec $x_1$

S42 — Det r

S52 — Mod $x_1$

S51 — $\|r * x1 - w1\| > e$ ?

S43 — Rec $x_2$

S44 — Det c

S45 — Rec $x_3$

S46 — Det h,g

P5

**FIG. 5**

FIG. 6

FIG. 7

**FIG. 8**

**FIG. 9**

Europäisches
Patentamt

European
Patent Office

Office européen
des brevets

## EUROPEAN SEARCH REPORT

Application Number

EP 23 30 5402

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIM MIN SOO ET AL: "Low-Complexity Nonlinear Self-Interference Cancellation for Full-Duplex Radios", 2016 IEEE GLOBECOM WORKSHOPS (GC WKSHPS), IEEE, 4 December 2016 (2016-12-04), pages 1-6, XP033063141, DOI: 10.1109/GLOCOMW.2016.7848956 [retrieved on 2017-02-08] | 1-5,7-9, 13-15 | INV. H04L25/02 |
| A | * page 1 - page 5 * ----- | 6,10-12 | |
| A | US 2020/295975 A1 (LI XIAOHUA [US] ET AL) 17 September 2020 (2020-09-17) * paragraph [0149] - paragraph [0158] * ----- | 1-15 | |

**TECHNICAL FIELDS SEARCHED (IPC)**

**H04L**

The present search report has been drawn up for all claims

| Place of search | Date of completion of the search | Examiner |
|---|---|---|
| Munich | 18 August 2023 | Baltersee, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 30 5402

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2023

| Patent document cited in search report | | Publication date | Patent family member(s) | | Publication date |
|---|---|---|---|---|---|
| US 2020295975 | A1 | 17-09-2020 | US | 2020295975 A1 | 17-09-2020 |
| | | | US | 2021243056 A1 | 05-08-2021 |
| | | | US | 2023021633 A1 | 26-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. PIAZZA ; B. SHANKAR ; B. OTTERSTEN.** Generalized direct predistortion with adaptive crest factor reduction control. *2015 IEEE International Conference on Acoustics, Speech and Signal Processing (ICASSP),* April 2015
- **B. WIDROW ; S. D. STEARNS.** *Adaptive signal processing,* 1985, vol. 1
- **D. ZHOU ; V. E. DEBRUNNER.** Novel adaptive nonlinear predistorters based on the direct learning algorithm. *IEEE Trans. Signal Process.,* 2007, vol. 55 (1), 120-133
- **N. ALIBERT.** *Iterative predistortion algorithms adapted to the increasing throughput of satellite communications,* 2018
- **R. MORGAN ; Z. MA ; J. KIM ; M. G. ZIERDT ; J. PASTALAN.** *A Generalized Memory Polynomial Model for Digital Predistortion of RF Power Amplifiers,* 2006, vol. 54 (10

- **S. BENEDETTO ; E. BIGLIERI ; R.DAFFARA.** Modeling and Performance Evaluation of Nonlinear Satellite Links-A Volterra Series Approach. *IEEE Trans. Aerospace and electronic systems,* July 1979, vol. 15 (4
- **D. R. MORGAN ; Z. MA ; J. KIM ; M. G. ZIERDT ; J. PASTALAN.** *A Generalized Memory Polynomial Model for Digital Predistortion of RF Power Amplifiers,* 2006, vol. 54 (10
- **A. SARTI ; S. PUPOLIN.** Recursive techniques for the synthesis of a pthorder inverse of a Volterra system. *Eur. Trans. Telecommun.,* 1992, vol. 3 (4), 315-322
- **M. SCHROEDER.** Synthesis of low-peak-factor signals and binary sequences with low autocorrelation. *IEEE Trans. Inf. Theo.,* January 1970, vol. 16 (1
- **D. CHU.** *Polyphase codes with good periodic correlation properties,* July 1972, vol. 18 (4), 531-532